# EUROPEAN PATENT SPECIFICATION

(11) **EP 3 730 672 B1**
(45) Date of publication and mention of the grant of the patent: **16.11.2022**
(21) Application number: 18892138.1
(22) Date of filing: 20.12.2018
(51) Int. Cl.: C23C 22/07, C23C 28/00, C23C 2/26, C23C 2/06, C23C 2/40, C09D 7/40, C09D 175/06, C09D 133/00

(54) **SURFACE TREATMENT SOLUTION COMPOSITION FOR TERNARY HOT-DIP ZINC ALLOY-PLATED STEEL SHEET, PROVIDING EXCELLENT CORROSION RESISTANCE AND BLACKENING RESISTANCE, TERNARY HOT-DIP ZINC ALLOY-PLATED STEEL SHEET SURFACE-TREATED USING SAME, AND MANUFACTURING METHOD THEREFOR**
OBERFLÄCHENBEHANDLUNGSLÖSUNGSZUSAMMENSETZUNG FÜR TERNÄRES FEUERVERZINKTES STAHLBLECH MIT AUSGEZEICHNETER KORROSIONSBESTÄNDIGKEIT UND SCHWÄRZUNGSBESTÄNDIGKEIT, UNTER VERWENDUNG DAVON OBERFLÄCHENBEHANDELTES, TERNÄRES FEUERVERZINKTES STAHLBLECH UND HERSTELLUNGSVERFAHREN DAFÜR
COMPOSITION DE SOLUTION DE TRAITEMENT DE SURFACE POUR TÔLE D'ACIER PLAQUÉE D'ALLIAGE DE ZINC PAR IMMERSION À CHAUD TERNAIRE, FOURNISSANT UNE EXCELLENTE RÉSISTANCE À LA CORROSION ET AU NOIRCISSEMENT, TÔLE D'ACIER PLAQUÉE D'ALLIAGE DE ZINC PAR IMMERSION À CHAUD TERNAIRE TRAITÉE EN SURFACE L'UTILISANT, ET SON PROCÉDÉ DE FABRICATION

(30) Priority: 22.12.2017 KR 20170177624
(43) Date of publication of application: 28.10.2020
(73) Proprietor: POSCO, Gyeongsangbuk-do 37859 (KR)
(72) Inventor: CHO, Soo-Hyoun, Pohang-si, Gyeongsangbuk-do 37877 (KR); SON, Won-Ho, Pohang-si, Gyeongsangbuk-do 37877 (KR)
(74) Representative: Zech, Stefan Markus
(86) International application number: PCT/KR2018/016284
(87) International publication number: WO 2019/124990

(56) References cited:
- WO-A1-02/31063
- WO-A1-2016/093286
- WO-A1-2016/183147
- KR-A- 20060 076 953
- KR-A- 20090 072 234
- KR-A- 20120 097 728
- KR-A- 20140 081 574
- KR-A- 20160 070 310
- US-A1- 2004 062 873

## Description

### [Technical Field]

The present disclosure relates to a chromium-free surface treatment composition applied to the surface of a metal material and a metal material surface-treated with the composition. More specifically, the present disclosure relates to a chromium-free surface treatment composition for improving corrosion resistance, blackening resistance, and alkali resistance of a ternary hot-dip zinc alloy plated steel sheet.

### [Background Art]

In general, a steel sheet having a hot dip zinc alloy plating layer comprising magnesium (Mg) and aluminum (Al) is a steel material having excellent corrosion resistance of red rust compared to a pure zinc alloy plated steel sheet.

The steel sheet having a zinc-plated layer containing magnesium (Mg) and aluminum (Al) is mostly exposed to zinc (Zn) or zinc alloy (Zn alloy), so that it is exposed to a general environment, especially a wet atmosphere. In addition, the magnesium and aluminum contained in the plating layer have a better oxygen affinity than zinc, and thus, when the oxygen bound to zinc is insufficient, a blackening phenomenon is likely to occur.

Conventionally, as a part of the anti-corrosion treatment, a 5 to 100 mg/m² chromate pretreatment film was formed on the metal surface, and then an organic film was formed. However, due to heavy metals, such as chromium, contained in the pre-treatment solution, additional pre-treatment facilities and processes were required as well as there being poor worker safety due to heavy metal wastewater. In addition, since the solution containing hexavalent chromium generated from washing water and waste water must be treated according to a special treatment process, there was a problem in that the manufacturing costs increased, and chromate-treated plated steel sheets also eluted chromium ions during use or disposal. There was a serious environmental pollution problem.

In order to solve these problems and secure corrosion resistance, in the prior art, surface treatment solutions, such as a chrome-free coating solution for corrosion resistance, have been developed.

For example, Japanese Patent Application Publication No. 53-28857 and Japanese Patent Application Publication No. 51-71233 disclose a solution comprising aluminum biphosphate, or a solution comprising aromatic carboxylic acids such as sodium acetate, sodium borate and imidazole in tannic acid, surfactants, etc. However, the coating material formed by the solutions has a poor corrosion resistance. On the other hand, Japanese Patent Application Publication No. 2002-332574 discloses a surface treatment solution composed of zirconium carbonate, vanadyl ion, a zirconium compound, etc., which has good corrosion resistance but is vulnerable to blackening resistance.

In addition, Japanese Patent Publication No. Hei 7-096699 discloses a surface treatment solution composed of a titanium-based, zirconium-based, phosphate-based, molybdenum-based compound, etc., but the blackening of hot-dip zinc alloy plated steel sheet comprising magnesium (Mg), aluminum (Al), etc. cannot be suppressed. In addition, Japanese Patent Application Publication No. 2005-146340 discloses a surface treatment solution composed of ammonium molybdate, a water-dispersed urethane resin, isopropylamine, zirconium ammonium carbonate, an epoxy-based silane coupling agent, and silica sol. It is difficult to apply where conductivity and weldability are required due to an increase in thickness, and when reducing the thickness, there is a problem in which sufficient corrosion resistance cannot be provided.

WO 2016/183147 A1 discloses a curable film-forming composition comprising: (a) a curing agent comprising reactive functional groups; (b) a compound comprising functional groups reactive with the reactive functional groups in (a); and (c) a photothermally active material. The composition may further include a catalyst component. Coated substrates are also provided using the compositions described, as well as methods for coating a substrate using the compositions.

WO 2016/093286 A1 describes a surface treatment agent for zinc-plated steel sheets, said agent satisfying all of corrosion resistance, adhesiveness with topcoat paints, blackening resistance, and adhesiveness with structural adhesives. This water-based surface treatment agent for zinc plated steel sheets being obtained by blending a zirconium carbonate compound, a specific acrylic resin, a vanadium compound, a phosphorous compound, and a cobalt compound.

WO 02/31063 A1 relates to a method for coating a metal surface with an aqueous composition, characterized in that the composition contains, in addition to water: a) at least one organic film former that contains at least one water-soluble or water-dispersible polymer with an acid number ranging from 5 to 200, b) at least one particulate inorganic compound with an average particle diameter measured by a scanning electron microscope in the range of from 0.005 to 0.3 µm , c) at least one slip additive and/or at least one corrosion inhibitor, d) optionally at least one organic solvent, e) optionally at least one silane and/or siloxane, f) optionally at least one cross-linking agent, and g) optionally at least one chromium (VI) compound. The clean metal surface is contacted with the aqueous composition and a particle-containing film is formed on the metal surface, which is then dried.

US 2004/062873 A1 relates to a method for coating a metallic strip. The paint-like coating is formed by coating the surface with an aqueous dispersion containing the following in addition to water: a) at least one organic film former containing at least one water-soluble or water-dispersed polymer with an acid value of 5 to 200; b) at least one inorganic compound in particle form with an average particle diameter measured on a scanning electron microscope of 0.005 to 0.3 µm; and c) at least one lubricant and/or at least one corrosion inhibitor.

### [Disclosure]

### [Technical Problem]

An aspect of the present disclosure is to provide a surface treatment composition for a hot-dip zinc alloy plated steel sheet providing excellent corrosion resistance, blackening resistance and alkali resistance in a hot-dip zinc alloy plated steel sheet product for home appliances, a surface treatment method using the same, and a surface-treated hot-dip zinc alloy plated steel sheet.

In addition, an aspect of the present disclosure is to provide a surface treatment composition of a plated steel sheet that does not contain heavy metal components such as chromium, which is an environmental pollutant, and is harmless to the human body and does not cause problems due to environmental pollution.

### [Technical Solution]

The above-mentioned problem is solved by a surface treatment composition as defined in claim 1 and a method of manufacturing a surface-treated ternary hot-dip zinc alloy plated steel sheet as defined in claim 9.

According to an aspect of the present disclosure, a surface treatment composition comprises: on the basis of 100 wt% of a solid part of the composition, 35-45 wt% of a water-soluble polyurethane resin; 25-40 wt% of a water-soluble acrylic emulsion resin; 5-15 wt% of a curing agent; 3-10 wt% of a silane compound; 0.5-1.5 wt% of a titanium-based compound; 0.3-2. 0 wt% of a zirconium-based compound; 1-3 wt% of phosphoric acid compound; 1-2 wt% of a coating adhesion enhancer; and 0.1-1 wt% of a lubricant.

The water-soluble polyurethane-based resin may be a reaction product of a polyester polyol or polycarbonate polyol and a polyisocyanate compound.

The polyester polyol or polycarbonate polyol may have a hydroxyl value of 80 to 200 mgKOH/g and a weight average molecular weight of 1,000 to 5,000.

The water-soluble acrylic emulsion resin may be a reaction product of 80 to 99% by weight of at least one monomer selected from the group consisting of acrylic monomers, methacrylic monomers and acid ester vinyl monomers, and 1 to 20% by weight of alkoxy silane containing a double bond capable of addition polymerization reaction.

The monomer may be an acrylic monomer and a methacrylic monomer mixed in a weight ratio of 1 to 3:1 to 4.

The curing agent may be at least one selected from the group consisting of a melamine-based curing agent, a carbodiimide-based curing agent, a block isocyanate-based curing agent, an aziridine-based curing agent, and an oxazoline-based curing agent.

The silane compound may be at least one selected from the group consisting of 2-(3,4 epoxycyclohexyl)-ethyltrimethoxysilane, 3-glycidoxypropyl trimethoxysilane, 3-glycidoxypropyl methyl diethoxysilane, 3 -glycidoxypropyl triethoxysilane, N-(2-aminoethyl)-3-aminopropyl methyldimethoxysilane, N-(2-aminoethyl)-3-aminopropyl trimethoxysilane, N-(2-aminoethyl)-3-aminopropyl triethoxysilane, 3-aminopropyl trimethoxy silane, 3-aminopropyl triethoxy silane, 3-ureido propyltrimethoxy silane and tetraethyl orthosilicate.

The titanium-based compound may be at least one selected from the group consisting of titanium acetylacetonate, iso-butoxytitanium ethyl acetoacetate, tetraisopropyl titanate, and tetranormalbutyl titanate.

The zirconium-based compound may be at least one selected from the group consisting of tetra normal-propyl zirconate, tetra normal-butyl zirconate, sodium zirconium carbonate, potassium zirconium carbonate, lithium zirconium carbonate, zirconium ammonium carbonate, triethanol amine zirconate and hexafluoro zirconate.

The phosphoric acid compound may be at least one of phosphate compound selected from the group consisting of at least one phosphate compound selected from primary sodium phosphate, secondary sodium phosphate, primary ammonium phosphate, primary potassium phosphate, and secondary potassium phosphate; and orthophosphoric acid.

The coating adhesion enhancer may be a phosphate ester, ammonium phosphate, or a mixture thereof.

The lubricant may be at least one selected from the group consisting of a paraffin wax, an olefin wax, a carnauba wax, a polyester wax, a polyethylene wax, a polypropylene wax, a polyethylene-teflon wax, and a polyteflon wax.

The surface treatment composition may further comprise a solvent, wherein the surface treatment composition comprises 10 to 20% by weight of a solid content and a residual solvent. The solvent may comprise 3 to 5% by weight of alcohol and a balance of water based on the total weight of the solvent.

According to an aspect of the present disclosure, a method of manufacturing a surface-treated ternary hot-dip zinc alloy plated steel sheet, comprises: coating the surface treatment composition on the ternary-based hot-dip zinc-alloy plated steel sheet on which the ternary-based hot-dip zinc alloy plating layer is formed; and drying the coated surface treatment composition to form a surface treatment coating layer.

The surface treatment composition may further comprise a solvent, wherein the surface treatment composition comprises 10 to 20% by weight of a solid content and a residual solvent.

The solvent may comprise 3 to 5% by weight of alcohol and a balance of water based on the total weight of the solvent.

The surface treatment composition may be coated to be 1.5 to 30 µm thick.

The coating may be performed by roll coating, spraying, dipping, spray squeezing or immersion squeezing.

The drying may be performed at a temperature of 70 to 150°C, based on a peak metal temperature (PMT).

The drying may be performed in a hot air drying furnace or an induction heating furnace.

The hot air drying furnace may have an internal temperature of 100 to 250°C.

The induction heating furnace may be applied with a current of 1000 to 4500 A.

The method of manufacturing a surface-treated ternary hot-dip zinc alloy plated steel sheet may further comprise water-cooling the surface-treated film layer.

The method of manufacturing a ternary hot-dip zinc alloy plated steel sheet may be performed by a continuous process, and the speed of the continuous process may be 80 to 120 mpm.

According to an aspect of the present disclosure, a surface-treated ternary hot-dip zinc alloy plated steel sheet, comprises: a steel sheet; a ternary hot-dip zinc alloy plating layer formed on at least one surface of the steel sheet; and a surface treatment coating layer formed on the ternary hot-dip zinc alloy plating layer, wherein the surface treatment coating layer is formed of the above surface treatment composition.

The ternary hot-dip zinc alloy plating layer may comprise an Al-rich layer formed at the interface between the base steel sheet and the ternary-based hot-dip zinc alloy plating layer, the occupied area ratio of the Al rich layer may be 70% or more (including 100%).

The ternary hot-dip zinc alloy plating layer may comprise 0.2 to 15% by weight of Al, 0.5 to 3.5% by weight of Mg, a balance of Zn and inevitable impurities.

The surface treatment coating layer may have a thickness of 0.3 to 3pm.

### [Advantageous Effects]

The ternary-based hot-dip zinc alloy plated steel sheet treated with a chromium-free surface treatment composition comprising a water-soluble organic resin and an inorganic compound according to an embodiment of the present disclosure has excellent corrosion resistance, blackening resistance, and alkali resistance, and in the case of treatment with a chromium-free surface treatment composition according to the embodiment of the present invention, there are no problems such as installation of additional equipment, increase in manufacturing costs and environmental pollution required when comprising chromium.

### [Best Mode for Invention]

Hereinafter, preferred embodiments of the present disclosure will be described with reference to various examples. However, embodiments of the present disclosure may be modified in various other forms, and the scope of the present disclosure is not limited to the embodiments described below.

The present disclosure relates to a chromium-free surface treatment composition containing a water-soluble organic resin and an inorganic compound, a ternary-based hot-dip zinc alloy plated steel sheet surface-treated using the composition, and a method for manufacturing the ternary-based hot-dip zinc alloy plated steel sheet.

A surface treatment composition according to an embodiment of the present disclosure comprises, based on 100% by weight of the solid content of the composition, 35 to 45% by weight of water-soluble polyurethane resin; 25-40% by weight of water-soluble acrylic emulsion resin; 5 to 15% by weight of curing agent; 3 to 10% by weight of silane compound; 0.5 to 1.5% by weight of titanium-based compound; 0.3 to 2.0% by weight of a zirconium-based compound; 1 to 3% by weight of a phosphoric acid compound; 1 to 2% by weight of the coating adhesion enhancer; and 0.1 to 1% by weight of lubricant. The surface treatment composition comprises, based on the total weight of the composition, 10 to 20% by weight of the solid content, and the residual solvent.

The ternary hot-dip zinc alloy plated steel sheet surface-treated with a surface treatment composition comprising a water-soluble organic resin and an inorganic compound according to an embodiment of the present disclosure has excellent corrosion resistance, blackening resistance and alkali resistance. In addition, it does not contain hexavalent chromium, a harmful environmental substance, and is friendly to the human body and the environment by comprising water-soluble organic resins and inorganic compounds harmless to the human body as main components.

The water-soluble polyurethane-based resin is a main resin of a surface treatment composition for a ternary hot-dip zinc alloy plated steel sheet, and is comprised to impart excellent corrosion resistance and alkali resistance to a surface-treated ternary hot-dip zinc alloy plated steel sheet.

The water-soluble polyurethane resin is a reaction product by reaction of a polyol compound and a polyisocyanate compound, and the polyol is preferably a polyester polyol or a polycarbonate polyol.

The polyester polyol or polycarbonate polyol preferably has a hydroxyl value of 80 to 200 mgKOH/g. When the hydroxyl value of the polyester polyol or polycarbonate polyol is less than 80 mgKOH/g, the stability of water dispersion decreases, and it is difficult to secure the required physical properties due to a lack of functional sites for reaction with an inorganic compound. On the other hand, when the hydroxyl group value exceeds 200 mgKOH/g, the water dispersion stability is excellent, but there may be a problem in which water resistance, corrosion resistance, and alkali degreasing properties are deteriorated after coating. The hydroxyl value of the polyester polyol or polycarbonate polyol may be, for example, 80 to 180, 80 to 150, 100 to 200, 100 to 150, and more preferably 100 to 150.

The polyester polyol or polycarbonate polyol preferably has a weight average molecular weight of 1,000 to 5,000. When the weight average molecular weight is less than 1,000, it is difficult to secure sufficient corrosion resistance, and when it exceeds 5,000, a problem in which solution stability is lowered may occur. The weight average molecular weight may be, for example, 1,000 to 4,500, 1000 to 4000, 1000 to 3500, 1500 to 5000, 1500 to 4500, 1500 to 4000, 2000 to 5000, 2000 to 4500, 2000 to 4000, more preferably It is 2000 to 4000.

The water-soluble polyurethane resin is preferably 35 to 45% by weight based on 100% by weight of the solid content of the surface treatment composition. When the water-soluble polyurethane resin is less than 35% by weight, it is difficult to secure sufficient corrosion resistance and alkali resistance, and when it exceeds 45% by weight, the content of the water-soluble acrylic emulsion resin and inorganic compounds in the surface treatment composition is relatively small, so the corrosion resistance is rather lowered, and a problem in which blackening resistance is lowered may occur. The water-soluble polyurethane resin may be, for example, 35 to 43% by weight, 35 to 42% by weight, 37 to 45% by weight, and 37 to 42% by weight, and more preferably 37 to 45% by weight.

The water-soluble acrylic emulsion resin is an auxiliary main resin for enhancing corrosion resistance of the surface treatment composition for a ternary hot-dip zinc alloy plated steel sheet, and is comprised to provide excellent corrosion resistance to the surface-treated ternary hot-dip zinc alloy plated steel sheet.

The water-soluble acrylic emulsion resin may be a reaction product obtained by reacting a monomer comprising at least one of an acrylic monomer, a methacrylic monomer, and an acid ester vinyl monomer with an alkoxysilane.

The monomer may be used by mixing an acrylic monomer and a methacrylic monomer. When mixing and using these, it is more preferable to mix in a weight ratio of 1 to 3:1 to 4. When used alone or in an excessive amount of any one component outside the above range, it is not preferable for corrosion resistance, and it is preferable to mix and use it in the above range. More preferably, the content of the methacrylic monomer may be used in a larger amount than that of the acrylic monomer, and for example, the methacrylic monomer may be used in a ratio of 2 to 4 with respect to the acrylic monomer 1.

As the alkoxy silane, an alkoxy silane having a double bond capable of addition polymerization with the monomer may be used. For example, the alkoxy silane is vinyltrimethoxysilane, vinyltriethoxysilane, 2-(3,4-epoxycyclohexyl) ethyltrimethoxysilane, 3-glycidoxypropyl methyldimethoxysilane, 3-glycidoxypropyl trimethoxysilane, 3-methacryloxyporpyl trimehoxysilane, and 3-aminopropyltriethoxysilane.

The water-soluble acrylic emulsion resin is an addition polymerization reaction product of 80 to 99% by weight of monomer and 1 to 20% by weight of alkoxy silane. When the content of the monomer is less than 80% by weight, the proportion of the alkoxy silane is relatively high and emulsion polymerization is not smoothly performed. When the content of the monomer exceeds 99% by weight, water resistance and corrosion resistance may be degraded due to the lack of alkoxy silane. For example, the monomer in the acrylic emulsion resin comprises 85 to 97% by weight, or 85 to 95% by weight, and may be a residual alkoxy silane.

When polymerizing the water-soluble acrylic emulsion resin, a reaction additive required for the reaction may be further comprised as necessary.

The water-soluble acrylic emulsion resin is preferably 25 to 40% by weight based on 100% by weight of the solid content of the surface treatment composition. When the water-soluble acrylic emulsion resin is less than 25% by weight, it is difficult to secure sufficient corrosion resistance. And when the water-soluble acrylic emulsion resin exceeds 40% by weight, the contents of the water-soluble polyurethane resin and the inorganic compound in the surface treatment composition are relatively small, so it is insufficient to secure an appropriate curing density, thereby causing corrosion and blackening resistance to decrease. Preferably, the content of the water-soluble acrylic emulsion resin may be 30 to 40% by weight.

The curing agent is comprised to form a solid organic resin film through crosslinking with the water-soluble polyurethane resin, which is the main resin, and the water-soluble acrylic emulsion resin, which is the auxiliary main resin.

The curing agent may be at least one selected from the group consisting of a melamine-based curing agent, a carbodiimide-based curing agent, a block isocyanate-based curing agent, an aziridine-based curing agent, and an oxazoline-based curing agent.

The curing agent is preferably comprised in 5 to 15% by weight based on 100% by weight of the solid content of the surface treatment composition. When the content of the curing agent is less than 5% by weight, sufficient crosslinking cannot be formed, so physical properties cannot be expected to improve, and when it exceeds 15% by weight, stability of the solution decreases due to excessive crosslinking, which may causes the composition to solidify over time. For example, the content of the curing agent may be 7 to 15% by weight, 10 to 15% by weight, preferably 10 to 15% by weight.

The surface treatment composition of the present invention comprises a silane compound. The silane compound undergoes a coupling-bonding reaction with the water-soluble organic resin to modify the water-soluble organic resin, whereby the water-soluble organic resin is firmly bound to the inorganic compound.

In addition, the silane compound is at least one selected from the group consisting of 2-(3,4 epoxycyclohexyl)-ethyltrimethoxysilane, 3-glycidoxypropyl trimethoxysilane, 3-glycidoxypropyl methyl diethoxysilane, 3-glycidoxy propyl triethoxysilane, N-(2-aminoethyl)-3-aminopropyl methyldimethoxysilane, N-(2-aminoethyl)-3-aminopropyl trimethoxysilane, N-(2-aminoethyl)-3-aminopropyl triethoxysilane, 3-aminopropyl trimethoxy silane, 3-aminopropyl triethoxy silane, 3-ureido propyltrimethoxy silane and tetraethyl orthosilicate.

The silane compound is preferably comprised in an amount of 3 to 10% by weight based on 100% by weight of the solid content of the surface treatment composition. When the content of the silane compound is less than 3% by weight, it is difficult to secure corrosion resistance due to insufficient content required when coupling reaction of the organic resin and the inorganic compound, and when the content of the silane compound exceeds 10% by weight, after the reaction, there may be a problem in which corrosion resistance decreases after processing due to the presence of an unreacted silane compound. For example, the silane compound may be 5 to 10% by weight, 7 to 10% by weight, preferably 7 to 10% by weight.

The titanium-based compound is comprised to improve the corrosion resistance of the plated steel sheet by forming a passivation film on the surface of the ternary hot-dip zinc plated steel sheet surface-treated with the surface treatment composition of the present disclosure. The titanium-based compound preferentially is eluted under a corrosive environment to suppress the increase in pH due to dissolution of the plating component, thereby providing an effect of improving corrosion resistance.

The titanium-based compound may be at least one selected from the group consisting of titanium acetylacetonate, iso-butoxytitanium ethyl acetoacetate, tetraisopropyl titanate and tetranormalbutyl titanate.

The titanium-based compound is preferably comprised in an amount of 0.5 to 1.5% by weight based on 100% by weight of the solid content of the surface treatment composition. If the content of the titanium-based compound is less than 0.5% by weight, it is difficult to secure corrosion resistance, and if it exceeds 1.5% by weight, there is a problem in which it is difficult to secure blackening resistance and alkali resistance. For example, the titanium-based compound may be 0.7 to 1.5% by weight, 1 to 1.5% by weight, and more preferably 1 to 1.5% by weight.

The zirconium-based compound may modify the surface of the plating layer by reaction with the surface of the ternary-based hot-dip zinc alloy plated steel sheet surface-treated with the surface treatment composition of the present disclosure, thereby improving the blackening resistance of the coated steel sheet. Even when the acidic liquid passes through the composite film and reaches the surface of the plated layer, the zirconium-based compound protects the surface of the plating layer and exhibits an effect of suppressing discoloration.

The zirconium-based compounds may be at least one selected from the group consisting of tetra normal-propyl zirconate, tetra normal-butyl zirconate, sodium zirconium carbonate, potassium zirconium carbonate, zirconium lithium carbonate, zirconium ammonium carbonate, triethanol amine zirconate and hexafluoro zirconate.

The zirconium-based compound is preferably comprised in an amount of 0.3 to 2% by weight based on 100% by weight of the solid content of the surface treatment composition. If the content of the zirconium-based compound is less than 0.3% by weight, there is a problem in which it is difficult to secure blackening resistance, and if it exceeds 2% by weight, the effect of improving blackening resistance is insignificant, and there is a problem in which corrosion resistance decreases. For example, the zirconium-based compound is 0.5 to 2% by weight, 1 to 2% by weight, 0.3 to 1.5% by weight, 0.5 to 1.5% by weight, 1 to 1.5% by weight, 1 to 2% by weight or 1 to 1.5% by weight may be More preferably, it is 1 to 2% by weight, and more preferably 1 to 1.5% by weight.

The phosphoric acid compound is comprised to impart excellent corrosion resistance and blackening resistance to the ternary hot-dip zinc alloy plated steel sheet surface-treated with the surface treatment composition of the present disclosure.

The phosphoric acid compound may be at least one of phosphate compound selected from the group consisting of primary sodium phosphate, secondary sodium phosphate, primary ammonium phosphate (NH₄)H₂PO₄, ammonium dihydrophosphate), primary phosphate, and secondary phosphate; and orthophosphoric acid.

The phosphoric acid compound is preferably comprised in an amount of 1 to 3% by weight based on 100% by weight of the solid content of the surface treatment composition. When the content of the phosphoric acid compound is less than 1% by weight, there is no effect on blackening resistance, but it may be difficult to secure corrosion resistance, and when the content of the phosphoric acid compound exceeds 3% by weight, it may be difficult to secure blackening resistance. The phosphoric acid compound may be, for example, 1.5 to 3 wt%, 2 to 3 wt%, 1 to 2.5 wt%, 1.5 to 2.5 wt%, 2 to 2.5 wt%, more preferably 2 to 3 wt%.

The coating adhesion enhancer improves the adhesion between the surface treatment composition comprised of the organic resin and the inorganic compound and the steel sheet, and in particular, does not cause peeling of the surface treatment composition under the processing conditions of the customer, and serves to provide excellent process adhesion.

The coating adhesion enhancer may be an ester phosphate, ammonium phosphate ((NH₄)₃H₂PO₄) or a mixture thereof.

The coating adhesion enhancer is preferably comprised in an amount of 1 to 2% by weight based on 100% by weight of the solid content of the surface treatment composition. When the content of the coating adhesion enhancer is less than 1% by weight, processing adhesion and corrosion resistance of the surface treatment composition are insufficient, and when the content of the adhesion promoter exceeds 2% by weight, solution stability of the surface treatment composition is deteriorated. The coating adhesion enhancer may be 1 to 1.7% by weight, 1 to 1.5% by weight, 1.2 to 2% by weight, or 1.5 to 2% by weight, and more preferably 1.5 to 2% by weight.

The lubricant is intended to impart lubricity to the surface treatment composition, and particularly provides a lubrication characteristic to improve processability in a processing process at a customer.

The lubricant is at least one selected from the group consisting of paraffin wax, olefin wax, carnauba wax, polyester wax, polyethylen wax, polypropylene wax, polyethylene-teflon wax, and polyteflon wax.

The lubricant is preferably comprised in an amount of 0.1 to 1% by weight based on 100% by weight of the solid content of the surface treatment composition. When the content of the lubricant is less than 0.1% by weight, the slip property of the surface treatment composition is insufficient, and thus, the surface treatment layer and the base steel sheet may be destroyed during press processing on the surface-treated steel sheet, and when the content of the lubricant exceeds 1% by weight, excessive lubricant particles are distributed on the surface of the coating layer, so that corrosion resistance may be deteriorated. The lubricant may be 0.3 to 1% by weight, 0.3 to 0.8% by weight, 0.5 to 1% by weight, 0.5 to 0.8% by weight, and preferably 0.5 to 1% by weight.

The surface treatment composition of the present disclosure comprises water as a solvent to dilute each component. The water means deionized water or distilled water. The solvent is comprised as a balance in addition to each component of the composition. The content of the solvent in the composition may be 80 to 90% by weight.

Furthermore, the surface treatment composition of the present disclosure may comprise alcohol as an auxiliary solvent for securing solution stability, and the alcohol may be ethanol or isopropyl alcohol. It is preferable that the alcohol is comprised in 3 to 5% by weight of the total solvent.

Another embodiment of the present disclosure provides a ternary hot-dip zinc alloy plated steel sheet surface-treated using the surface treatment composition comprising the water-soluble organic resin and inorganic compounds and a method for manufacturing the same.

Specifically, the surface-treated ternary hot-dip zinc alloy plated steel sheet comprises a steel sheet, a ternary hot-dip zinc alloy plating layer formed on at least one surface of the steel plate, and a surface-treated film layer comprising an organic resin and an inorganic compound formed on the ternary hot-dip zinc plated layer.

The ternary hot-dip zinc alloy plating layer comprises preferably 0.2 to 15% by weight of Al, 0.5 to 3.5% by weight of Mg, and residual Zn and unavoidable impurities ternary hot-dip zinc-alloy plated steel containing.

Further, the interface between the base steel sheet and the ternary-based hot-dip zinc alloy plating layer comprises an Al-rich layer, and the occupied area ratio of the Al-rich layer is 70% or more (including 100%), more preferably 73% or more. Here, the occupied area ratio refers to the ratio of the area of the Al-rich layer to the area of the base steel sheet when viewed in the thickness direction of the base steel sheet from the surface of the plated steel sheet, and the plated steel sheet is assumed to be planar without considering three-dimensional bending or the like. When the occupied area ratio of the Al thickening layer is 70% or more, the Al-rich layer has a form in which fine particles are continuously formed, thereby significantly improving plating properties and plating adhesion.

In the ternary hot-dip zinc alloy plated steel of the present disclosure, Mg is very important component that serves to improve the corrosion resistance of the ternary hot-dip zinc alloy plated steel sheet, and effectively prevents corrosion of ternary hot-dip zinc-alloy plated steel sheet by forming a dense zinc hydroxide-based corrosion product on the surface of the plating layer under corrosive environment.

In order to secure the desired corrosion resistance effect in the present disclosure, the Mg may be comprised at least 0. 5% by weight, more preferably at least 0.9% by weight. However, when the content is excessive, the Mg oxide dross rapidly increases on the surface of the plating bath, and the anti-oxidation effect by adding trace elements is canceled. To prevent this, Mg is preferably comprised at 3.5% by weight or less, and more preferably, at 3.2% by weight or less.

In the ternary hot-dip zinc alloy plated steel of the present invention, Al suppresses the formation of Mg oxide dross in the plating bath, and Al reacts with Zn and Mg in the plating bath to form Zn-Al-Mg-based intermetallic compound on the surface of the steel sheet, and the formed Zn-Al-Mg-based intermetallic compound improves corrosion resistance of plated steel sheet.

In order to obtain this effect in the present disclosure, Al may be comprised 0.2% by weight or more, more preferably, 0.9% by weight or more. However, if the content is excessive, the weldability and phosphate treatment of the plated steel sheet may deteriorate. In order to prevent this, Al is preferably comprised 15% by weight or less, and more preferably, may be comprised in 12% by weight or less.

The surface treatment coating layer comprising the organic resin and the inorganic compound comprises 35 to 45% by weight of a water-soluble polyurethane resin, 25 to 40% by weight of a water-soluble acrylic emulsion resin, 5 to 15% by weight of a curing agent, 3 to 10% by weight of a silane compound, and titanium-based 0.5 to 1.5% by weight of a compound, 0.3 to 2.0% by weight of a zirconium-based compound, 1 to 3% by weight of a phosphoric acid compound, 1 to 2% by weight of a coating adhesion enhancer, and 0.1 to 1% by weight of a lubricant.

The surface treatment coating layer comprising the organic resin and the inorganic compound is a coating layer formed by drying the surface treatment solution composition, and the organic resin and the inorganic compound are components remaining after volatilization of all the volatile substances contained in the composition. Therefore, the surface treatment film layer comprising the organic resin and the inorganic compound does not comprise water or alcohol as a solvent, and also does not comprise the solvent comprised in the organic resin and the inorganic compound. Therefore, the components comprised in the surface treatment coating layer comprising the organic resin and the inorganic compound correspond to the content based on 100% by weight of the total solids.

Each component of the surface-treated coating layer overlaps with the each solid component of the surface-treated coating composition, and detailed description is omitted.

According to an embodiment of the present disclosure, A method of manufacturing a ternary-based hot-dip zinc alloy plated steel sheet is provided, the method comprises preparing a hot-dip zinc alloy plated steel plate with a ternary hot-dip zinc alloy plating layer, coating a surface treatment composition on the ternary hot-dip zinc alloy plating layer, and drying the surface treatment composition to form a surface-treated coating layer.

The method provided by an embodiment of the present disclosure comprises coating the surface treatment composition on the surface of the plating layer of the ternary hot-dip zinc alloy plated steel sheet. The surface treatment composition may be coated to a thickness of 1.5 to 30µm. The coated surface treatment composition becomes a dried coating layer having a thickness of 0.3 to 3 µm through a drying process.

When the coating thickness of the surface treatment solution composition is less than 1.5 µm, the surface treatment solution composition may be thinly applied to a peak portion of the roughness of the steel sheet, thereby deteriorating corrosion resistance. On the other hand, when the composition is coated in excess of 30 µm, weldability and processability may be deteriorated due to the formation of a thick film layer.

The method for coating the surface treatment composition may be applied without any particular limitation as long as it is a conventionally performed coating method, and examples thereof comprise roll coating, spraying, dipping, spray squeezing, and deposition squeezing.

The process of drying the surface treatment composition coated on the hot-dip zinc alloy plated steel sheet is preferably performed at a temperature of 70 to 150 °C based on the peak metal temperature (PMT) . If the drying temperature is less than 70°C based on the peak metal temperature (PMT) of the hot-dip zinc alloy plated steel sheet, the hardening reaction of the organic resin is not completely achieved, resulting in insufficient formation of a solid film structure, and corrosion resistance and alkali resistance may be deteriorated. On the other hand, if the drying temperature exceeds 150°C, the work productivity becomes poor due to the generation of water vapor and fume during the water cooling process, and the surface quality of the product may deteriorate due to the condensation phenomenon that the water vapor condenses on the top of the drying equipment.

The drying is preferably carried out in a hot air drying furnace or an induction heating furnace. When the surface treatment coating composition is dried using the hot air drying furnace, the hot air drying furnace preferably has an internal temperature of 100 to 250°C. On the other hand, when the surface treatment coating composition is dried using the induction heating furnace, the current applied to the induction heating furnace is preferably 1000 to 4500 A, and more preferably 1500 to 3500 A.

If the internal temperature of the hot-air drying furnace is less than 100°C or the current applied to the induction heating furnace is less than 1000A, the curing reaction of the surface treatment coating composition is not perfectly achieved, and thus corrosion resistance and alkali resistance may be inferior. In addition, if the internal temperature of the hot air drying furnace exceeds 250°C or the current applied to the induction heating furnace exceeds 4500 A, during the water cooling process, water vapor and fume are generated, which degrades work productivity, and the evaporated water vapor condenses and adheres to the top of the drying equipment, this causes degradation of the surface quality of the product.

In addition, after drying the surface treatment composition to form a surface treatment coating layer, the surface treatment coating layer may be water-cooled to finally provide a surface-treated ternary hot-dip zinc alloy plated steel sheet.

The method of manufacturing the ternary hot-dip zinc alloy plated steel sheet according to an embodiment of the present disclosure may be performed in a continuous process, and the speed of the continuous process is preferably 80 to 120 mpm. If the continuous process speed is less than 80 mpm, productivity may be deteriorated, and if it exceeds 120 mpm, the surface treatment composition may scatter in the process of drying the surface treatment composition to cause surface defects.

### [Mode for Invention]

Hereinafter, the present disclosure will be described in more detail through specific examples. The following examples are only examples for helping the understanding of the present disclosure, and the scope of the present disclosure is not limited thereto.

### Example

### Test and evaluation methods

In this embodiment, the method and evaluation criteria for evaluating the properties of the surface-treated steel sheet are as follows.

### <Solution stability>

200 ml of the surface treatment composition was stored in an oven at a temperature of 50°C, and then precipitation or gel generation after 7 days was observed, and evaluated as good and bad.

### <In-Plane corrosion resistance>

The in-plane corrosion resistance of a steel sheet was evaluated according to the test method as described in ASTM B117.After the specimen was processed, the white rust occurrence time (the occurrence time refers to the time when the white rust generation area is 5% or more with respect to the total area) of the steel sheet over time was measured. At this time, the evaluation criteria are as follows.
⊚: White rust occurrence time is more than 144 hours
∘: White rust occurrence time was 96 hours or more and less than 144 hours.
△: White rust generation time was 55 hours or more and less than 96 hours.
X: White rust occurs less than 55 hours

### <Corrosion resistance at processed part>

After the specimen was pushed up to a height of 6 mm using an Erichsen tester, the degree of white rusting was measured when 48 hours had elapsed. At this time, the evaluation criteria are as follows.
⊚: After 48 hours, the area where white rust occurs is less than 5% of the total area
△: After 48 hours, the area where white rust occurs is 5% or more and less than 7% of the total area
X: After 48 hours, the area where white rust occurs is more than 7% of the total area

### <Blackening resistance>

Specimen color change (color difference: ΔE) before and after the test was observed by placing the specimen in a constant temperature and humidity chamber for 50 hours at 50°C and maintaining a relative humidity of 95%. At this time, the evaluation criteria are as follows.
⊚: ΔE≤2
∘: 2 <ΔE ≤ 3
Δ: 3 <ΔE ≤ 4
X: ΔE> 4

### <Alkali resistance>

The specimen was immersed in an alkaline degreasing solution at 60°C for 2 minutes, followed by water washing and air blowing, and the color difference (ΔE) before/after the test was measured. As the alkaline degreasing solution, Finecleaner L 4460 A: 20 g/2.4 L + L 4460 B 12 g/2.4 L (pH=12) from Pacarizing Co., Ltd., was used. At this time, the evaluation criteria are as follows.
⊚: ΔE ≤ 2
∘: 2 <ΔE ≤ 3
Δ: 3 <ΔE ≤ 4
X: ΔE> 4

### <Weldability>

Weldability was evaluated whether there is no spatter during welding and a constant strength is maintained. Welding was performed under the conditions of a pressing force of 250 kg, a welding time of 15 cycles, and a conduction current of 7.5 kA with a pneumatic AC Spot welding machine. The evaluation criteria are as follows.
∘: Welding possible
△: Welding is possible, but quality is poor
X: No welding

### Example 1-Changes in physical properties according to changes in the content of water-soluble polyurethane resin

Water-soluble polyurethane resin having 120 mg KOH/g of a hydroxyl value of a polyester polyol and having 3,000 of a weight average molecular weight, water-soluble acrylic emulsion resin obtained by reacting 95% by weight of a mixed monomer in which an acrylic monomer and a methacrylic monomer are mixed in a 2:3 weight ratio and 5% by weight of an alkoxy silane, melamine curing agent (CYMEL 303), silane compound in which 3-glycidoxypropyl trimethoxy silane and tetraethyl ortho silicate are mixed in a weight ratio of 1:1, titanium-based compound of titanium acetylacetonate, a zirconium-based compound of triethanol amine zirconate, a phosphoric acid compound of ammonium dihydrophosphatee, a coating adhesion enhancer of phosphate ester, and a lubricant of polyethylene-teflon wax are used as illustrated in Table 1 based on 100 parts by weight of solids. The surface treatment compositions were prepared by mixing solid content with 81.4% by weight of water and 3.4% by weight of ethanol as a solvent.

A ternary hot-dip zinc alloy plated steel sheets (7 cm x 15 cm length) having a plating layer (plating layer thickness 8 µm) consisted of 1.5% by weight of Mg, 1.5% by weight of Al, and the balance Zn were provided, from which the oil component was removed. The hot-dip zinc alloy plated steel sheets included an Al-rich layer at the interface between the plating layer and the base steel sheets, and the occupied area ratio of the Al-rich layer was 85%.

The surface treatment composition was applied to the surface of the ternary hot-dip zinc alloy plated steel sheet with a thickness of 7 µm using a bar coater, and then cured under the conditions of PMT 120°C to prepare a test specimen having a coating layer thickness of 1 µm.

For the hot-dip zinc alloy plated steel sheets having the coating layer as described above, the in-plane corrosion resistance, the corrosion resistance at the processed part, the blackening resistance and the alkali resistance were evaluated, and the results are illustrated in Table 1.

**[Table 1]**

| No. | Content of the composition(% by weight) | | | | | | | | | In-P lane | proc ess | Bl ac k | Al ka li |
|---|---|---|---|---|---|---|---|---|---|---|---|---|---|
| | PU | Ac -E | Cur-A | Sil | Ti | Zr | Ph | CAE | Lub | | | | |
| CE1 | 32 | 38 | 14 | 9.5 | 1 | 1.5 | 2 | 1.5 | 0.5 | X | X | ○ | x |
| IE1 | 35 | 35 | 14 | 9.5 | 1 | 1.5 | 2 | 1.5 | 0.5 | ○ | ⊚ | ○ | ○ |
| IE2 | 40 | 35 | 10.5 | 8 | 1 | 1.5 | 2 | 1.5 | 0.5 | ⊚ | ⊚ | ⊚ | ⊚ |
| IE3 | 45 | 30 | 10.5 | 8 | 1 | 1.5 | 2 | 1.5 | 0.5 | ⊚ | ⊚ | ⊚ | ⊚ |
| CE2 | 47 | 28 | 10.5 | 8 | 1 | 1.5 | 2 | 1.5 | 0.5 | X | X | X | ○ |

| | | | | | | | | | | | | | |
|---|---|---|---|---|---|---|---|---|---|---|---|---|---|
| IE: Inventive Example CE: Comparative Example PU: polyurethane Ac-E: acryl emulsion Cur-A: Curing Agent Sil: Silane compound Ti: Titanium based compound Zr: Zirconium based compound Ph: Phosphoric acid compound CAE: Coating Adhesion Enhancer Lub: lubricant In-Plane: in-plane corrosion resistance Processed: Corrosion resistance at processed part Blackening: Blackening resistance Alkali: Alkali resistance Solution: Solution stability Weld: Weldability * The content of the compositions are based on 15% solids. | | | | | | | | | | | | | |

As illustrated in Table 1, Inventive Examples 1 to 3 in which the content of the water-soluble polyurethane resin satisfies the content according to the present disclosure showed good or better results in all physical properties.

On the other hand, Comparative Example 1, in which too little water-soluble polyurethane resin was added, showed poor results in in-plane corrosion resistance, corrosion resistance at processing part, and alkali resistance, and Comparative Example 2, in which too much water-soluble polyurethane resin was added, showed poor results in in-plane corrosion resistance and corrosion resistance at processing part and blackening resistance.

### Example 2-Changes in physical properties according to changes in the content of water-soluble acrylic emulsion resin

The same compositions as in Example 1 were used in an amount as illustrated in Table 2 based on 100 parts by weight of solids, and the surface treatment compositions were prepared by mixing the solids with 81.4% by weight of water and 3.4% by weight of ethanol.

Test specimens were prepared in the same manner as in Example 1 using the surface treatment compositions.

For the hot-dip zinc alloy plated steel sheets having the coating layer as described above, the in-plane corrosion resistance, the corrosion resistance at processed part, the blackening resistance and the alkali resistance were evaluated, and the results are illustrated in Table 2.

**[Table 2]**

| No. | Content of the composition(% by weight) | | | | | | | | | In-P lane | proc ess | Bl ac k | Al ka li |
|---|---|---|---|---|---|---|---|---|---|---|---|---|---|
| | Ac -E | PU | Cur-A | Sil | Ti | Zr | Ph | CAE | Lub | | | | |
| CE3 | 23 | 44 | 14 | 9.5 | 1. 5 | 2 | 3 | 2 | 1 | X | X | ○ | ○ |
| IE4 | 25 | 44 | 14 | 9.5 | 1 | 1.5 | 3 | 1.5 | 0.5 | ○ | ⊚ | ○ | ○ |
| IE5 | 30 | 42 | 13.5 | 8 | 1 | 1.5 | 2 | 1.5 | 0.5 | ⊚ | ⊚ | ⊚ | ⊚ |
| IE6 | 35 | 40 | 10.5 | 8 | 1 | 1.5 | 2 | 1.5 | 0.5 | ⊚ | ⊚ | ⊚ | ⊚ |
| IE7 | 40 | 35 | 10.5 | 8 | 1 | 1.5 | 2 | 1.5 | 0.5 | ⊚ | ⊚ | ⊚ | ⊚ |
| CE4 | 42 | 35 | 10.5 | 6 | 1 | 1.5 | 2 | 1.5 | 0.5 | X | X | X | ○ |

| | | | | | | | | | | | | | |
|---|---|---|---|---|---|---|---|---|---|---|---|---|---|
| * The content of the compositions are based on 15% solids. | | | | | | | | | | | | | |

As illustrated in Table 2, Inventive Examples 4 to 7 in which the content of the water-soluble acrylic emulsion resin satisfies the content according to the present disclosure showed good or better results in all physical properties.

On the other hand, Comparative Example 3, in which too little water-soluble acrylic emulsion resin was added, showed poor results in in-plane corrosion resistance and corrosion resistance at processing part, and Comparative Example 4, in which too much water-soluble acrylic emulsion resin was added, showed poor results in the in-plane corrosion resistance and the corrosion resistance at processing part and the blackening resistance.

### Example 3-Change in physical properties according to changes in the content of curing agent

The same compositions as in Example 1 were used in an amount as illustrated in Table 3 based on 100 parts by weight of solids, and the surface treatment compositions were prepared by mixing the solids with 81.4% by weight of water and 3.4% by weight of ethanol.

Test specimens were prepared in the same manner as in Example 1 using the surface treatment compositions.

The hot-dip zinc alloy plated steel sheets having the coating layer as described above were evaluated for the in-plane corrosion resistance, the corrosion resistance at processed part, the blackening resistance, the alkali resistance and the solution stability, and the results are illustrated in Table 3.

**[Table 3]**

| No. | Content of the composition(% by weight) | | | | | | | | | In -P la ne | pr oc es s | Bl ac k | Al ka li | so lu ti on |
|---|---|---|---|---|---|---|---|---|---|---|---|---|---|---|
| | Cur-A | PU | Ac -E | Sil | Ti | Zr | Ph | CA E | Lub | | | | | |
| CE5 | 3 | 43 | 35 | 9.5 | 1. 5 | 2 | 3 | 2 | 1 | X | X | X | X | ○ |
| IE8 | 5 | 43 | 35 | 9.5 | 1 | 1.5 | 3 | 1. 5 | 0.5 | ○ | ○ | ○ | ○ | ○ |
| IE9 | 10 | 40 | 35 | 8 | 1 | 1.5 | 2. 5 | 1. 5 | 0.5 | ⊚ | ⊚ | ⊚ | ⊚ | ○ |
| IE10 | 15 | 38 | 33 | 7.5 | 1 | 1.5 | 2 | 1. 5 | 0.5 | ⊚ | ⊚ | ○ | ⊚ | ○ |
| CE6 | 17 | 38 | 33 | 6 | 1 | 1. 5 | 1. 5 | 1. 5 | 0.5 | ○ | ○ | ○ | ○ | x |

| | | | | | | | | | | | | | | |
|---|---|---|---|---|---|---|---|---|---|---|---|---|---|---|
| * The content of the compositions are based on 15% solids. | | | | | | | | | | | | | | |

As illustrated in Table 3, Inventive Examples 4 to 7 in which the content of the melamine curing agent satisfies the content according to the present disclosure showed good or better results in all physical properties.

On the other hand, Comparative Example 5, in which too little melamine curing agent was added, showed poor results in all properties except solution stability, and Comparative Example 4, in which too much melamine curing agent was added, showed poor results in alkali resistance and solution stability.

### Example 4-Change in physical properties according to changes in the content of silane compound

The same compositions as in Example 1 were used in an amount as illustrated in Table 4 based on 100 parts by weight of solids, and the surface treatment compositions were prepared by mixing the solids with 81.4% by weight of water and 3.4% by weight of ethanol.

Test specimens were prepared in the same manner as in

### Example 1 using the surface treatment compositions.

For the hot-dip zinc alloy plated steel sheets having the coating layer as described above, the in-plane corrosion resistance, the corrosion resistance at processed part, the blackening resistance, the alkali resistance and the solution stability were evaluated, and the results are illustrated in Table 4.

**[Table 4]**

| No. | Content of the composition(% by weight) | | | | | | | | | In -P la ne | pr oc es s | Bl ac k | Al ka li |
|---|---|---|---|---|---|---|---|---|---|---|---|---|---|
| | Sil | PU | Ac -E | Cur-A | Ti | Zr | Ph | CA E | Lub | | | | |
| CE7 | 2 | 42 | 35 | 11.5 | 1. 5 | 2 | 3 | 2 | 1 | X | X | X | ○ |
| IE11 | 3 | 43 | 36 | 10.5 | 1 | 1.5 | 3 | 1. 5 | 0.5 | ○ | ⊚ | ○ | ○ |
| IE23 | 7 | 43 | 30 | 12.5 | 1 | 1.5 | 3 | 1. 5 | 0.5 | ⊚ | ⊚ | ⊚ | ⊚ |
| IE13 | 10 | 40 | 33 | 10.5 | 1 | 1.5 | 2 | 1. 5 | 0.5 | ⊚ | ⊚ | ⊚ | ⊚ |
| CE8 | 12 | 40 | 31 | 10.5 | 1 | 1. 5 | 2 | 1. 5 | 0.5 | ○ | X | X | ○ |

| | | | | | | | | | | | | | |
|---|---|---|---|---|---|---|---|---|---|---|---|---|---|
| * The content of the compositions are based on 15% solids. | | | | | | | | | | | | | |

As illustrated in Table 4, Inventive Examples 11 to 13 in which the content of the silane compound satisfies the content according to the present disclosure showed good or better results in all physical properties.

On the other hand, Comparative Example 7, in which too little silane compound was added, showed poor results in the in-plane corrosion resistance, the corrosion resistance at processing part and the blackening resistance, and Comparative Example 8, in which too much silane compound was added, showed poor the corrosion resistance at processing part and the blacking resistance. These results were due to formation of a hard coating layer due to the increased degree of dryness of the coating layer.

### Example 5-Change in physical properties according to changes in the type of silane compound

Test specimens were prepared in the same manner as in Inventive Example 12 of Example 4, except that the type of the silane compound was changed as illustrated in Table 5 below.

The plate corrosion resistance was evaluated for the hot-dip zinc alloy plated steel sheet having the coating layer as described above, and the results are illustrated in Table 5.

**[Table 5]**

| | A | B | C | D | E | F | G | H | I | J | K | Plane |
|---|---|---|---|---|---|---|---|---|---|---|---|---|
| IE14 | 7 | 0 | 0 | 0 | 0 | 0 | 0 | 0 | 0 | 0 | 0 | ○ |
| IE15 | 0 | 7 | 0 | 0 | 0 | 0 | 0 | 0 | 0 | 0 | 0 | ⊚ |
| IE16 | 0 | 0 | 7 | 0 | 0 | 0 | 0 | 0 | 0 | 0 | 0 | ○ |
| IE17 | 0 | 0 | 0 | 7 | 0 | 0 | 0 | 0 | 0 | 0 | 0 | ⊚ |
| IE18 | 0 | 0 | 0 | 0 | 7 | 0 | 0 | 0 | 0 | 0 | 0 | ○ |
| IE19 | 0 | 0 | 0 | 0 | 0 | 7 | 0 | 0 | 0 | 0 | 0 | ⊚ |
| IE20 | 0 | 0 | 0 | 0 | 0 | 0 | 7 | 0 | 0 | 0 | 0 | ○ |
| IE21 | 0 | 0 | 0 | 0 | 0 | 0 | 0 | 7 | 0 | 0 | 0 | ○ |
| IE22 | 0 | 0 | 0 | 0 | 0 | 0 | 0 | 0 | 7 | 0 | 0 | ○ |
| IE23 | 0 | 0 | 0 | 0 | 0 | 0 | 0 | 0 | 0 | 7 | 0 | ⊚ |
| IE24 | 0 | 0 | 0 | 0 | 0 | 0 | 0 | 0 | 0 | 0 | 7 | ○ |
| IE25 | 3.5 | 3.5 | 0 | 0 | 0 | 0 | 0 | 0 | 0 | 0 | 0 | ○ |
| IE26 | 3.5 | 0 | 0 | 3.5 | 0 | 0 | 0 | 0 | 0 | 0 | 0 | ○ |
| IE27 | 0 | 3.5 | 0 | 0 | 0 | 3.5 | 0 | 0 | 0 | 0 | 0 | ⊚ |
| IE28 | 0 | 0 | 0 | 3.5 | 0 | 3.5 | 0 | 0 | 0 | 0 | 0 | ○ |
| IE29 | 0 | 0 | 0 | 0 | 3.5 | 0 | 3.5 | 0 | 0 | 0 | 0 | ○ |
| IE30 | 0 | 0 | 0 | 0 | 0 | 3.5 | 0 | 0 | 0 | 3.5 | 0 | ⊚ |
| IE31 | 0 | 0 | 3.5 | 0 | 0 | 3.5 | 0 | 0 | 0 | 0 | 0 | ○ |
| IE32 | 0 | 0 | 0 | 0 | 0 | 0 | 3.5 | 0 | 0 | 3.5 | 0 | ○ |
| IE33 | 3.5 | 0 | 0 | 0 | 0 | 0 | 0 | 0 | 0 | 3.5 | 0 | ○ |
| IE34 | 0 | 0 | 0 | 0 | 0 | 0 | 0 | 0 | 0 | 3.5 | 3.5 | ○ |
| IE35 | 0 | 0 | 0 | 3.5 | 0 | 0 | 0 | 0 | 3.5 | 0 | 0 | ○ |
| IE36 | 0 | 0 | 0 | 0 | 3.5 | 0 | 0 | 3.5 | 0 | 0 | 0 | ○ |
| IE37 | 0 | 0 | 0 | 0 | 0 | 0 | 0 | 3.5 | 0 | 0 | 3.5 | ○ |
| IE38 | 0 | 3.5 | 3.5 | 0 | 0 | 0 | 0 | 0 | 0 | 0 | 0 | ⊚ |
| IE39 | 0 | 0 | 3.5 | 0 | 0 | 0 | 0 | 0 | 0 | 0 | 3.5 | ○ |
| IE40 | 0 | 0 | 0 | 0 | 0 | 0 | 3.5 | 0 | 3.5 | 0 | 0 | ○ |
| IE41 | 0 | 0 | 0 | 0 | 3.5 | 0 | 0 | 0 | 3.5 | 0 | 0 | ○ |
| IE42 | 0 | 3.5 | 0 | 3.5 | 0 | 0 | 0 | 0 | 0 | 0 | 0 | ○ |
| IE43 | 0 | 3.5 | 0 | 0 | 0 | 0 | 0 | 0 | 0 | 0 | 3.5 | ⊚ |
| IE44 | 3.5 | 0 | 3.5 | 0 | 0 | 0 | 0 | 0 | 0 | 0 | 0 | ○ |
| IE45 | 0 | 0 | 0 | 0 | 0 | 0 | 0 | 0 | 3.5 | 3.5 | 0 | ○ |
| IE46 | 0 | 3.5 | 0 | 3.5 | 0 | 0 | 0 | 0 | 0 | 0 | 0 | ○ |
| IE47 | 0 | 0 | 0 | 0 | 0 | 0 | 3.5 | 3.5 | 0 | 0 | 0 | ○ |

| | | | | | | | | | | | | |
|---|---|---|---|---|---|---|---|---|---|---|---|---|
| * The content of the compositions are based on 15% solids. In Table 5, A to K are as follows. A: 2-(3,4epoxycyclohexyl)-ethyltrimethoxysilane, B: 3-glycidoxypropyl trimethoxysilane, C: 3-glycidoxypropyl methyldiethoxysilane, D: 3-glyidoxypropyl triethoxysilane, E: N-(2-aminoethyl)-3-aminopropyl methyldimethoxysilane, F: N-(2-aminoethyl)-3-aminopropyl trimethoxysilane, G: N-(2-aminoethyl)-3-aminopropyl triethoxysilane, H: 3-aminopropyl trimethoxy silane, I: 3-aminopropyl triethoxy silane, J: 3-ureido propyltrimethoxy Silane, K: Tetraethyl orthosilicate | | | | | | | | | | | | |

As illustrated in Table 5, Inventive Examples 14 to 47 showed good or excellent results in the in-plane corrosion resistance. In particular, the test specimen treated with the composition of Inventive Example 43 showed the best result with a white rust area of 0% after 144 hours of the in-plane corrosion resistance.

### Example 6-Changes in physical properties according to changes in the content of titanium-based compound

The same compositions as in Example 1 were used in an amount as illustrated in Table 6 based on 100 parts by weight of solids, and the surface treatment compositions were prepared by mixing the solids with 81.4% by weight of water and 3.4% by weight of ethanol.

Test specimens were prepared in the same manner as in Example 1 using the surface treatment compositions.

For the hot-dip zinc alloy plated steel sheets having the coating layer as described above, the plate corrosion resistance, the corrosion resistance at processed part, the blackening resistance and the alkali resistance were evaluated, and the results are illustrated in Table 6.

**[Table 6]**

| No. | Content of the composition(% by weight) | | | | | | | | | In -P la ne | pr oc es s | Bl ac k | Al ka li |
|---|---|---|---|---|---|---|---|---|---|---|---|---|---|
| | Ti | PU | Ac -E | Cur-A | Sil | Zr | Ph | CA E | Lub | | | | |
| CE9 | 0. 3 | 42 | 35 | 10.2 | 8 | 1 | 1. 5 | 1. 5 | 0.5 | X | X | ○ | ○ |
| IE48 | 0.5 | 42 | 35 | 10 | 8 | 1 | 1.5 | 1. 5 | 0.5 | ○ | ○ | ○ | ○ |
| IE49 | 1 | 40 | 35 | 10 | 8 | 1.5 | 2. 5 | 1. 5 | 0.5 | ⊚ | ⊚ | ⊚ | ⊚ |
| IE50 | 1.5 | 40 | 34.5 | 10.5 | 8 | 2 | 2 | 1. 5 | 0.5 | ⊚ | ⊚ | ○ | ⊚ |
| CE10 | 1. 7 | 40 | 35 | 10.3 | 8 | 1. 5 | 1. 5 | 1. 5 | 0.5 | ○ | ○ | X | X |

| | | | | | | | | | | | | | |
|---|---|---|---|---|---|---|---|---|---|---|---|---|---|
| * The content of the compositions are based on 15% solids. | | | | | | | | | | | | | |

As illustrated in Table 6, Inventive Examples 48 to 50, in which the content of the titanium-based compound satisfies the content according to the present disclosure, showed good or better results of in all physical properties.

On the other hand, Comparative Example 9, in which too little titanium-based compound was added, showed poor results in the in-plane corrosion resistance and the corrosion resistance at processing part, and Comparative Example 10, in which too much titanium-based compound was added, showed poor results in the blackening resistance and the alkali resistance.

### Example 7-Change in physical properties according to changes in the content of zirconium-based compounds

The same compositions as in Example 1 were used in an amount as illustrated in Table 7 based on 100 parts by weight of solids, and the surface treatment compositions were prepared by mixing the solids with 81.4% by weight of water and 3.4% by weight of ethanol as a solvent.

Using the surface treatment compositions, test specimens were prepared in the same manner as in Example 1.

For the hot-dip zinc alloy plated steel sheets having the coating layer as described above, the in-plane corrosion resistance, the corrosion resistance at processed part, the blackening resistance and the alkali resistance were evaluated, and the results are illustrated in Table 7.

**[Table 7]**

| No. | Content of the composition(% by weight) | | | | | | | | | In -P la ne | pr oc es s | Bl ac k | Al ka li |
|---|---|---|---|---|---|---|---|---|---|---|---|---|---|
| | Zr | PU | Ac -E | Cur-A | Sil | Ti | Ph | CA E | Lub | | | | |
| CE11 | 0. 2 | 42 | 35 | 10 | 9 | 0. 3 | 1. 5 | 1. 5 | 0.5 | △ | △ | X | ○ |
| IE51 | 0.3 | 42 | 35 | 10 | 8.7 | 0.5 | 1. 5 | 1. 5 | 0.5 | ○ | ○ | ○ | ○ |
| IE52 | 1 | 40 | 35 | 10 | 8.5 | 1 | 2.5 | 1. 5 | 0.5 | ⊚ | ⊚ | ⊚ | ⊚ |
| IE53 | 1.5 | 40 | 34.5 | 10.5 | 8 | 1.5 | 2 | 1. 5 | 0.5 | ⊚ | ⊚ | ⊚ | ⊚ |
| IE53 | 2 | 40 | 34.5 | 10.5 | 7.5 | 1.5 | 2 | 1. 5 | 0.5 | ⊚ | ⊚ | ○ | ⊚ |
| CE12 | 2. 2 | 40 | 35 | 10.3 | 7.3 | 1. 7 | 1. 5 | 1. 5 | 0.5 | X | X | ○ | ⊚ |

| | | | | | | | | | | | | | |
|---|---|---|---|---|---|---|---|---|---|---|---|---|---|
| * The content of the compositions are based on 15% solids. | | | | | | | | | | | | | |

As illustrated in Table 7, Inventive Examples 51 to 54, in which the content of the zirconium-based compound satisfies the content according to the present disclosure, showed good or better results in all physical properties.

On the other hand, Comparative Example 11, in which too little zirconium-based compound was added, showed normal results in the in-plane corrosion resistance and the corrosion resistance at processing part and poor result in the black resistance, and Comparative Example 12, in which too many zirconium-based compounds were added, showed poor results in the in-plane corrosion resistance and the corrosion resistance at processed parts.

### Example 8-Change in physical properties according to changes in the content of phosphoric acid compound

The same compositions as in Example 1 were used in an amount as illustrated in Table 8 based on 100 parts by weight of solids, and the surface treatment compositions were prepared by mixing the solids with 81.4% by weight of water and 3.4% by weight of ethanol as a solvent.

Test specimens were prepared in the same manner as in Example 1 using the surface treatment compositions.

For the hot-dip zinc alloy plated steel sheets having the coating layer as described above, the in-plane corrosion resistance, the corrosion resistance at processed part, the blackening resistance and the alkali resistance were evaluated, and the results are illustrated in Table 8.

**[Table 8]**

| No. | Content of the composition(% by weight) | | | | | | | | | In -P la ne | pr oc es s | Bl ac k | Al ka li |
|---|---|---|---|---|---|---|---|---|---|---|---|---|---|
| | Ph | PU | Ac -E | Cur-A | Sil | Ti | Zr | CA E | Lub | | | | |
| CE13 | 0. 8 | 42 | 34 | 10 | 8.7 | 1 | 1. 5 | 1. 5 | 0.5 | X | X | ○ | ○ |
| IE55 | 1 | 42 | 34 | 10 | 8.5 | 1 | 1.5 | 1. 5 | 0.5 | ○ | ○ | ○ | ○ |
| IE56 | 2 | 40 | 35 | 10 | 8.5 | 1 | 1.5 | 1. 5 | 0.5 | ⊚ | ⊚ | ⊚ | ⊚ |
| IE57 | 3 | 40 | 34 | 10 | 8.5 | 1 | 1.5 | 1. 5 | 0.5 | ⊚ | ⊚ | ⊚ | ⊚ |
| CE14 | 3. 2 | 40 | 34 | 10 | 8.3 | 1 | 1. 5 | 1. 5 | 0.5 | ○ | ⊚ | X | ⊚ |

| | | | | | | | | | | | | | |
|---|---|---|---|---|---|---|---|---|---|---|---|---|---|
| * The content of the compositions are based on 15% solids. | | | | | | | | | | | | | |

As illustrated in Table 8, Inventive Examples 55 to 57, in which the content of the phosphoric acid compound satisfies the content suggested by the present disclosure, showed good or better results in all physical properties.

On the other hand, Comparative Example 13, in which too little phosphoric acid compound was added, showed poor results in the in-plane corrosion resistance and the corrosion resistance at processed part, and Comparative Example 14, in which too much phosphoric acid compound was added, showed poor result in black resistance.

### Example 9-Change in physical properties according to changes in the content of the coating adhesion enhancer

The same compositions as in Example 1 were used in an amount as illustrated in Table 9 based on 100 parts by weight of solids, and the surface treatment compositions were prepared by mixing the solids with 81.4% by weight of water and 3.4% by weight of ethanol.

Using the surface treatment compositions, test specimens were prepared in the same manner as in Example 1.

For the hot-dip zinc alloy plated steel sheets having the coating layer as described above, the in-plane corrosion resistance, the corrosion resistance at processed part, the blackening resistance, the alkali resistance and the solution stability were evaluated, and the results are illustrated in Table 9.

**[Table 9]**

| No. | Content of the composition(% by weight) | | | | | | | | | In-P lane | pr oc es s | Bl ac k | Al ka li | solu tion |
|---|---|---|---|---|---|---|---|---|---|---|---|---|---|---|
| | CA E | PU | Ac -E | Cu r-A | Si l | T i | Zr | P h | Lu b | | | | | |
| CE 15 | 0. 8 | 42 | 33 .5 | 10 | 8. 7 | 1 | 1. 5 | 2 | 0. 5 | X | X | ○ | ○ | ○ |
| IE 58 | 1 | 42 | 33. 5 | 10 | 8. 5 | 1 | 1. 5 | 2 | 0. 5 | ○ | ○ | ○ | ○ | ○ |
| IE 59 | 1. 5 | 40 | 35 | 10 | 8. 5 | 1 | 1. 5 | 2 | 0. 5 | ⊚ | ⊚ | ⊚ | ⊚ | ○ |
| IE 60 | 2 | 40 | 34. 5 | 10 | 8. 5 | 1 | 1. 5 | 2 | 0. 5 | ⊚ | ⊚ | ⊚ | ⊚ | ○ |
| CE 16 | 2. 2 | 40 | 34 .5 | 10 | 8. 3 | 1 | 1. 5 | 2 | 0. 5 | ○ | ⊚ | ○ | ⊚ | X |

| | | | | | | | | | | | | | | |
|---|---|---|---|---|---|---|---|---|---|---|---|---|---|---|
| * The content of the compositions are based on 15% solids. | | | | | | | | | | | | | | |

As illustrated in Table 9, Inventive Examples 58 to 60, in which the content of the adhesion promoter satisfies the content suggested by the present disclosure, showed good or better results in all physical properties.

On the other hand, Comparative Example 15, in which too little adhesion promoter was added, showed poor results in the in-plane corrosion resistance and the corrosion resistance at processing part, and Comparative Example 16, in which too much adhesion promoter was added, showed poor result in the solution stability.

### Example 10-Change in physical properties according to changes in the content of lubricant

The same compositions as in Example 1 were used in an amount as illustrated in Table 10 based on 100 parts by weight of solids, and the surface treatment compositions were prepared by mixing the solids with 81.4% by weight of water and 3.4% by weight of ethanol as a solvent.

Using the surface treatment compositions, test specimens were prepared in the same manner as in Example 1.

For the hot-dip zinc alloy plated steel sheets having the coating layer as described above, the in-plane corrosion resistance, the corrosion resistance at processed part, blackening resistance and alkali resistance were evaluated, and the results are illustrated in Table 10.

**[Table 10]**

| No . | Content of the composition(% by weight) | | | | | | | | | In-P lane | proc ess | Bl ac k | Al ka li |
|---|---|---|---|---|---|---|---|---|---|---|---|---|---|
| | Lu b | PU | Ac -E | Cur-A | Sil | Ti | Zr | Ph | CAE | | | | |
| CE 17 | 0 | 42 | 34 | 10 | 8 | 1 | 1. 5 | 2 | 1.5 | ○ | X | ○ | ○ |
| IE 610. 1 | 0. 1 | 42 | 34 | 10 | 8 | 1 | 1.4 | 2 | 1.5 | ○ | ○ | ○ | ○ |
| IE 62 | 0. 5 | 40 | 35 | 10 | 8.5 | 1 | 1.5 | 2 | 1.5 | ⊚ | ⊚ | ⊚ | ⊚ |
| IE 63 | 0. 8 | 40 | 35 | 10 | 8.5 | 1 | 1.2 | 2 | 1.5 | ⊚ | ⊚ | ⊚ | ⊚ |
| IE 64 | 1 | 40 | 35 | 10 | 8.5 | 1 | 1 | 2 | 1.5 | ⊚ | ⊚ | ⊚ | ⊚ |
| CE 18 | 1. 2 | 40 | 35 | 10 | 8.3 | 1 | 1 | 2 | 1.5 | X | X | △ | △ |

| | | | | | | | | | | | | | |
|---|---|---|---|---|---|---|---|---|---|---|---|---|---|
| * The content of the compositions are based on 15% solids. | | | | | | | | | | | | | |

As illustrated in Table 10, Inventive Examples 61 to 64, in which the content of the lubricant satisfies the content according to the present disclosure, showed good or better results in all physical properties.

On the other hand, Comparative Example 17, in which no lubricant was added, showed poor result in the corrosion resistance at processing part, and Comparative Example 18, in which too much lubricant was added, showed poor results in the in-plane corrosion resistance and the corrosion resistance at processing part, the blackening resistance and the alkali resistance.

### Example 11-Change in physical properties according to changes in the thickness of the coating layer and the drying temperature

The surface treatment compositions according to Inventive Example 2 of Example 1 was used in an amount as illustrated in Table 1 based on 100 parts by weight of solids, wherein the silane compound was used in Inventive Example 43 of Example 5. The surface treatment compositions were prepared by mixing the solids with 81.4% by weight of water and 3.4% by weight of ethanol.

The surface treatment compositions were coated on the surface of the hot-dip zinc alloy plated steel sheets as in Example 1 by a bar coater and dried in a hot air drying furnace to prepare a specimen. The thickness of the coated film layer and the PMT temperature were controlled as illustrated in Table 11 below.

For the hot-dip zinc alloy plated steel sheets of the fabricated specimen, the in-plane corrosion resistance, the corrosion resistance at processed part, the blackening resistance, the alkali resistance and the weldability were evaluated, and the results are illustrated in Table 11.

**[Table 11]**

| No. | Thick (*µ*m) | D Tem(°C) | In-Plane | process | Black | Alkali | Weld |
|---|---|---|---|---|---|---|---|
| CE19 | 0.1 | 120 | △ | X | △ | △ | ○ |
| IE65 | 0.3 | 120 | ⊚ | ⊚ | ⊚ | ⊚ | ○ |
| IE66 | 1 | 120 | ⊚ | ⊚ | ⊚ | ⊚ | ○ |
| IE67 | 2 | 120 | ⊚ | ⊚ | ○ | ⊚ | ○ |
| IE68 | 3 | 120 | ⊚ | ⊚ | ○ | ⊚ | ○ |
| CE20 | 3.5 | 120 | ⊚ | ⊚ | X | ⊚ | X |
| CE21 | 1 | 50 | X | X | X | X | ○ |
| IE69 | 1 | 70 | ○ | ○ | ○ | △ | ○ |
| IE70 | 1 | 100 | ⊚ | ⊚ | ⊚ | ⊚ | ○ |
| IE71 | 1 | 150 | ⊚ | ⊚ | ○ | ⊚ | ○ |
| CE22 | 1 | 170 | ⊚ | ⊚ | X | ⊚ | ○ |

| | | | | | | | |
|---|---|---|---|---|---|---|---|
| Thick: Thickness of the coating layer D Tem: drying temperature | | | | | | | |

As illustrated in Table 11, Inventive Examples 65 to 68, in which the coating layer was formed with 0.3 to 3.0 µm, showed good or better results in all physical properties.

On the other hand, Comparative Example 19, in which the coating layer formed too thin, showed normal (△) results in the in-plane corrosion resistance, the blackening resistance and the alkali resistance, and poor result in the corrosion resistance at processed part. Additionally, Comparative Example 20, in which the coating layer formed too thick, showed poor results in black resistance and weldability. In addition, since there was no improvement in properties compared to Inventive Example 68, it was shown that it is economically undesirable to form a film with a thickness greater than or equal to Inventive Example 68.

In addition, as illustrated in Table 11, inventive examples 69 to 71, in which the coating layer was formed at a drying temperature of 70 to 150° C, showed good or better results in all physical properties.

On the other hand, Comparative Example 21, in which the drying temperature was too low, showed poor results in all physical properties except weldability due to insufficient drying. On the other hand, Comparative Example 22, in which the drying temperature was too high, showed poor result in the blackening resistance due to fume drop on the steel sheet due to condensation of water vapor generated in the steel sheet during the water cooling process.

Although the embodiments of the present disclosure have been described in detail above, the scope of rights of the present disclosure is not limited thereto, and it is possible that various modifications and variations are possible without departing from the present disclosure as set forth in the claims. It will be apparent to those of ordinary skill in the field.

## Claims

1. A surface treatment composition comprising:
on the basis of 100 wt% of a solid part of the composition,
35-45 wt% of a water-soluble polyurethane resin;
25-40 wt% of a water-soluble acrylic emulsion resin;
5-15 wt% of a curing agent;
3-10 wt% of a silane compound;
0.5-1.5 wt% of a titanium-based compound;
0.3-2.0 wt% of a zirconium-based compound;
1-3 wt% of phosphoric acid compound;
1-2 wt% of a coating adhesion enhancer; and
0.1-1 wt% of a lubricant,
wherein the water-soluble acrylic emulsion resin is a reaction product of 80 to 99% by weight of at least one monomer selected from the group consisting of acrylic monomers, methacrylic monomers and acid ester vinyl monomers, and 1 to 20% by weight of alkoxy silane containing a double bond capable of addition polymerization reaction.

2. The surface treatment composition of claim 1, wherein the water-soluble polyurethane-based resin is a reaction product of a polyester polyol or polycarbonate polyol and a polyisocyanate compound.

3. The surface treatment composition of claim 2, wherein the polyester polyol or polycarbonate polyol has a hydroxyl value of 80 to 200 mgKOH/g.

4. The surface treatment composition of claim 1, wherein the monomer is a mixture of an acrylic monomer and a methacrylic monomer in a weight ratio of 1 to 3:1 to 4.

5. The surface treatment composition of claim 1, wherein the titanium-based compound is at least one selected from the group consisting of titanium acetylacetonate, iso-butoxytitanium ethyl acetoacetate, tetraisopropyl titanate, and tetranormalbutyl titanate.

6. The surface treatment composition of claim 1, wherein the zirconium-based compound is at least one selected from the group consisting of tetra normal-propyl zirconate, tetra normal-butyl zirconate, sodium zirconium carbonate, potassium zirconium carbonate, lithium zirconium carbonate, zirconium ammonium carbonate, triethanol amine zirconate and hexafluoro zirconate.

7. The surface treatment composition of claim 1, wherein the phosphoric acid compound is at least one of phosphate compound selected from the group consisting of primary sodium phosphate, secondary sodium phosphate, primary ammonium phosphate, primary potassium phosphate, and secondary potassium phosphate; and orthophosphoric acid.

8. The surface treatment composition of claim 1, wherein the coating adhesion enhancer is a phosphate ester, ammonium phosphate, or a mixture thereof.

9. A method of manufacturing a surface-treated ternary hot-dip zinc alloy plated steel sheet, comprising:
coating a surface treatment composition of any one of claims 1 to 8 on the ternary-based hot-dip zinc-alloy plated steel sheet; and
drying the coated surface treatment composition to form a surface treatment coating layer.

10. The method of manufacturing a surface-treated ternary hot-dip zinc alloy plated steel sheet of claim 9, wherein the surface treatment composition is coated to be 1.5 to 30 µm thick.

11. The method of manufacturing a surface-treated ternary hot-dip zinc alloy plated steel sheet of claim 9, wherein the drying is performed at a temperature of 70 to 150°C, based on a peak metal temperature (PMT).

12. A surface-treated ternary hot-dip zinc alloy plated steel sheet, comprising:
a steel sheet;
a ternary hot-dip zinc alloy plating layer formed on at least one surface of the steel sheet; and
a surface treatment coating layer formed on the ternary hot-dip zinc alloy plating layer
wherein the surface treatment coating layer is formed of the surface treatment composition of claims 1 to 8.

13. The surface-treated ternary hot-dip zinc alloy plated steel sheet of claim 12, wherein the ternary hot-dip zinc alloy plating layer includes an Al-rich layer formed at the interface between the base steel sheet and the ternary-based hot-dip zinc alloy plating layer, the occupied area ratio of the Al-rich layer is 70% or more (including 100%).

14. The surface-treated ternary hot-dip zinc alloy plated steel sheet of claim 12, wherein the ternary hot-dip zinc alloy plating layer comprises 0.2 to 15% by weight of Al, 0.5 to 3.5% by weight of Mg, a balance of Zn and inevitable impurities.

## Patentansprüche

1. Oberflächenbehandlungszusammensetzung, aufweisend:
auf Grundlage von 100 Gew.-% eines festen Bestandteils der Zusammensetzung,
35 - 45 Gew.-% eines wasserlöslichen Polyurethanharzes;
25 - 40 Gew.-% eines wasserlöslichen Acrylemulsionsharzes;
5 - 15 Gew.-% eines Härtemittels;
3 - 10 Gew.-% einer Silanverbindung;
0,5 bis 1,5 Gew.-% einer Verbindung auf Titanbasis;
0,3 bis 2,0 Gew.-% einer Verbindung auf Zirkoniumbasis;
1 - 3 Gew.-% einer Phosphorsäureverbindung;
1 - 2 Gew.-% eines Beschichtungsadhäsionsförderers; und
0,1 - 1 Gew.-% eines Schmiermittels,
wobei das wasserlösliche Acrylemulsionsharz ein Reaktionsprodukt aus 80 bis 99 Gew.-% von zumindest einem Monomer, das aus der Gruppe ausgewählt ist, die aus Acrylmonomeren, Methacrylmonomeren und Säureestervinylmonomeren besteht, und 1 bis 20 Gew.-% von einem Alkoxysilan ist, das eine Doppelbindung enthält, die zu einer Additionspolymerisationsreaktion in der Lage ist.

2. Oberflächenbehandlungszusammensetzung nach Anspruch 1, wobei das wasserlösliche Harz auf Polyurethanbasis ein Reaktionsprodukt eines Polyesterpolyols oder Polycarbonatpolyols und einer Polyisocyanatverbindung ist.

3. Oberflächenbehandlungszusammensetzung nach Anspruch 2, wobei das Polyesterpolyol oder Polycarbonatpolyol einen Hydroxylwert von 80 bis 200 mgKOH/g hat.

4. Oberflächenbehandlungszusammensetzung nach Anspruch 1, wobei das Monomer ein Gemisch aus einem Acrylmonomer und einem Methacrylmonomer in einem Gewichtsverhältnis von 1 bis 3:1 bis 4 ist.

5. Oberflächenbehandlungszusammensetzung nach Anspruch 1, wobei die Verbindung auf Titanbasis zumindest eine Verbindung ist, die aus der Gruppe ausgewählt ist, die aus Titanacetylacetonat, Iso-Butoxytitanethylacetoacetat, Tetraisopropyltitanat und Tetranormalbutyltitanat ausgewählt ist.

6. Oberflächenbehandlungszusammensetzung nach Anspruch 1, wobei die Verbindung auf Zirkoniumbasis zumindest eine Verbindung ist, die aus der Gruppe ausgewählt ist, die aus Tetranormalpropylzirkonat, Tetranormalbutylzirkonat, Natriumzirkoniumcarbonat, Kaliumzirkoniumcarbonat, Lithiumzirkoniumcarbonat, Zirkoniumammoniumcarbonat, Triethanolaminzirkonat und Hexafluorzirkonat besteht.

7. Oberflächenbehandlungszusammensetzung nach Anspruch 1, wobei die Phosphorsäureverbindung zumindest eine Phosphatverbindung ist, die aus der Gruppe ausgewählt ist, die aus primärem Natriumphosphat, sekundärem Natriumphosphat, primärem Ammoniumphosphat, primärem Kaliumphosphat und sekundärem Kaliumphosphat; und Orthophosphorsäure besteht.

8. Oberflächenbehandlungszusammensetzung nach Anspruch 1, wobei der Beschichtungsadhäsionsförderer ein Phosphatester, Ammoniumphosphat oder ein Gemisch von diesen ist.

9. Verfahren zum Herstellen eines oberflächenbehandelten Stahlblechs mit einer ternären Schmelztauchzinklegierungsplattierung, aufweisend:
Auftragen einer oberflächenbehandelten Zusammensetzung nach einem der Ansprüche 1 bis 8 auf dem schmelztauchzinklegierungsplattierten Stahlblech auf ternärer Basis; und
Trocknen der aufgetragenen Oberflächenbehandlungszusammensetzung, um eine Oberflächenbehandlungsdeckschicht zu auszubilden.

10. Verfahren zum Herstellen eines oberflächenbehandelten Stahlblechs mit einer ternären Schmelztauchzinklegierungsplattierung nach Anspruch 9, wobei die Oberflächenbehandlungszusammensetzung aufgetragen wird, sodass sie 1.5 bis 30 µm dick ist.

11. Verfahren zum Herstellen eines oberflächenbehandelten Stahlblechs mit einer ternären Schmelztauchzinklegierungsplattierung nach Anspruch 9, wobei das Trocknen bei einer Temperatur von 70 bis 150°C auf Grundlage einer Spitzenmetalltemperatur (PMT) erfolgt.

12. Oberflächenbehandeltes Stahlblech mit einer ternären Schmelztauchzinklegierungsplattierung, aufweisend:
ein Stahlblech;
eine ternäre Schmelztauchzinklegierungsplattierungsschicht, die auf zumindest einer Oberfläche des Stahlblechs ausgebildet ist; und
eine Oberflächenbehandlungsdeckschicht, die auf der ternären Schmelztauchzinklegierungsplattierungsschicht ausgebildet ist,
wobei die Oberflächenbehandlungsdeckschicht aus der Oberflächenbehandlungszusammensetzung der Ansprüche 1 bis 8 ausgebildet ist.

13. Oberflächenbehandeltes Stahlblech mit einer ternären Schmelztauchzinklegierungsplattierung nach Anspruch 12, wobei die ternäre Schmelztauchzinklegierungsplattierungsschicht eine Al-reiche Schicht aufweist, die an der Grenzfläche zwischen dem Basisstahlblech und der ternären Schmelztauchzinklegierungsplattierungsschicht ausgebildet ist, wobei das eingenommene Flächenverhältnis der Al-reichen Schicht 70 % oder mehr (einschließlich 100 %) beträgt.

14. Oberflächenbehandeltes Stahlblech mit einer ternären Schmelztauchzinklegierungsplattierung nach Anspruch 12, wobei die ternäre Schmelztauchzinklegierungsplattierungsschicht 0,2 bis 15 Gew.-% Al, 0,5 bis 3,5 Gew.-% Mg, einen Rest aus Zn und unvermeidbare Verunreinigungen aufweist.

## Revendications

1. Composition de traitement de surface comprenant :
sur la base de 100 % en poids d'une partie solide de la composition,
35-45 % en poids d'une résine de polyuréthane hydrosoluble ;
25-40 % en poids d'une résine d'émulsion acrylique hydrosoluble ;
5-15 % en poids d'un agent de durcissement ;
3-10 % en poids d'un composé de silane ;
0,5-1,5 % en poids d'un composé à base de titane ;
0,3-2,0 % en poids d'un composé à base de zirconium ;
1-3 % en poids d'un composé d'acide phosphorique ;
1-2 % en poids d'un rehausseur d'adhérence de revêtement ; et
0,1-1 % en poids d'un lubrifiant,
sachant que la résine d'émulsion acrylique hydrosoluble est un produit de réaction de 80 à 99 % en poids d'au moins un monomère sélectionné dans le groupe constitué par des monomères acryliques, des monomères méthacryliques et des monomères de vinyle d'ester d'acide, et 1 à 20 % en poids de silane d'alkoxy contenant une double liaison capable de réaction de polymérisation par addition.

2. La composition de traitement de surface de la revendication 1, sachant que la résine à base de polyuréthane hydrosoluble est un produit de réaction d'un polyol de polyester ou polyol de polycarbonate et d'un composé de polyisocyanate.

3. La composition de traitement de surface de la revendication 2, sachant que le polyol de polyester ou polyol de polycarbonate a une valeur d'hydroxyle de 80 à 200 mgKOH/g.

4. La composition de traitement de surface de la revendication 1, sachant que le monomère est un mélange d'un monomère acrylique et d'un monomère méthacrylique dans un rapport de poids de 1 à 3:1 à 4.

5. La composition de traitement de surface de la revendication 1, sachant que le composé à base de titane est au moins un composé sélectionné dans le groupe constitué par l'acétylacétonate de titane, l'éthylacétoacétate d'iso-butoxytitane, le titanate de tétraisopropyle, et le titanate de tétranormalbutyle.

6. La composition de traitement de surface de la revendication 1, sachant que le composé à base de zirconium est au moins un composé sélectionné dans le groupe constitué par le zirconate de tétra-normal-propyle, le zirconate de tétra-normal-butyle, le carbonate de zirconium sodium, le carbonate de zirconium potassium, le carbonate de zirconium lithium, le carbonate d'ammonium zirconium, le zirconate d'amine de triéthanol et le zirconate d'hexafluoro.

7. La composition de traitement de surface de la revendication 1, sachant que le composé d'acide phosphorique est au moins un composé de phosphate sélectionné dans le groupe constitué par le phosphate de sodium primaire, le phosphate de sodium secondaire, le phosphate d'ammonium primaire, le phosphate de potassium primaire, et le phosphate de potassium secondaire ; et l'acide orthophosphorique.

8. La composition de traitement de surface de la revendication 1, sachant que le rehausseur d'adhérence de revêtement est un ester de phosphate, un phosphate d'ammonium, ou un mélange de ceux-ci.

9. Procédé de fabrication d'une tôle d'acier plaquée d'alliage de zinc par immersion à chaud ternaire traitée en surface, comprenant :
le revêtement d'une composition de traitement de surface de l'une quelconque des revendications 1 à 8 sur la tôle d'acier plaquée d'alliage de zinc par immersion à chaud à base ternaire ; et
le séchage de la composition de traitement de surface revêtue pour former une couche de revêtement de traitement de surface.

10. Le procédé de fabrication d'une tôle d'acier plaquée d'alliage de zinc par immersion à chaud ternaire traitée en surface de la revendication 9, sachant que la composition de traitement de surface est revêtue pour être de 1,5 à 30 µm d'épaisseur.

11. Le procédé de fabrication d'une tôle d'acier plaquée d'alliage de zinc par immersion à chaud ternaire traitée en surface de la revendication 9, sachant que le séchage est effectué à une température de 70 à 150 °C, sur la base d'une température pic-métal (PMT).

12. Tôle d'acier plaquée d'alliage de zinc par immersion à chaud ternaire traitée en surface, comprenant :
une tôle d'acier ;
une couche de placage d'alliage de zinc par immersion à chaud ternaire formée sur au moins une surface de la tôle d'acier ; et
une couche de revêtement de traitement de surface formée sur la couche de placage d'alliage de zinc par immersion à chaud ternaire,
sachant que la couche de revêtement de traitement de surface est composée de la composition de traitement de surface des revendications 1 à 8.

13. La tôle d'acier plaquée d'alliage de zinc par immersion à chaud ternaire traitée en surface de la revendication 12, sachant que la couche de placage d'alliage de zinc par immersion à chaud ternaire inclut une couche riche en Al formée à l'interface entre la tôle d'acier de base et la couche de placage d'alliage de zinc par immersion à chaud à base ternaire, le rapport d'aire occupée de la couche riche en Al étant de 70 % ou plus (incluant 100 %).

14. La tôle d'acier plaquée d'alliage de zinc par immersion à chaud ternaire traitée en surface de la revendication 12, sachant que la couche de placage d'alliage de zinc par immersion à chaud ternaire comprend 0,2 à 15 % en poids d'Al, 0,5 à 3,5 % en poids de Mg, un solde de Zn et d'impuretés inévitables.
